Europäisches Patentamt

European Patent Office

Office européen des brevets

(19)

(11) Veröffentlichungsnummer: **0 303 943**
**A2**

(12) **EUROPÄISCHE PATENTANMELDUNG**

(21) Anmeldenummer: 88112932.4

(22) Anmeldetag: 09.08.88

(51) Int. Cl.4: **C08G 77/60**

(30) Priorität: 11.08.87 DE 3726702

(43) Veröffentlichungstag der Anmeldung:
22.02.89 Patentblatt 89/08

(84) Benannte Vertragsstaaten:
AT BE CH DE FR GB IT LI NL

(71) Anmelder: WACKER-CHEMIE GMBH
Prinzregentenstrasse 22
D-8000 München 22(DE)

(72) Erfinder: Rengstl, Alfred, Dr., Dipl.-Chem.
Am Zoglerberg 8
D-8261 Reischach(DE)

(54) Verfahren zur Verringerung des Halogengehaltes von halogenhaltigen Polycarbosilanen und Polysilanen.

(57) Die Erfindung betrifft ein Verfahren zur Verringerung des Halogengehalts von direkt an Siliciumatome gebundenem Halogen enthaltenden Polycarbosilanen und/oder Polysilanen, das dadurch gekennzeichnet ist, daß die genannten Polysilane und/oder Polycarbosilane mit Verbindungen der allgemeinen Formel

$$R-\overset{O}{\underset{\|}{C}}-OR',$$

wobei R Wasserstoff, Methyl- oder Ethylrest und R' Wasserstoff, Lithium, Natrium, Kalium oder Acetylrest bedeutet, in Kontakt gebracht werden.

EP 0 303 943 A2

## Verfahren zur Verringerung des Halogengehalts von halogenhaltigen Polycarbosilanen und Polysilanen

Die Erfindung betrifft ein Verfahren zur Verringerung des Halogengehalts von direkt an Siliciumatome gebundenem Halogen enthaltenden Polycarbosilanen und/oder Polysilanen.

Polysilane und Polycarbosilane sind wertvolle Zwischenprodukte zur Herstellung von Siliciumcarbid. Polysilane, beispielsweise, sind herstellbar aus Organochlordisilanen in Gegenwart von Tetraalkylphosphonium- oder Tetraalkylammoniumhalogeniden ( US 4 298 558, GB 2 024 789). Aufgrund dieser Herstellungsweise enthalten die genannten Polymere erhebliche Mengen an an Siliciumatome gebundenem Chlor. Um die Freisetzung von halogenhaltigen Gasen bei der weiteren Verarbeitung der Polymere zu Siliciumcarbid zu verhindern, muß dieser Halogengehalt vermindert werden. R. H. Baney et al. (Organometallics 1983 (2), 859 -864) beschrieben die Reaktion von halogenhaltigen Polycarbosilanen und Polysilanen mit Grignard Reagentien, Alkoholen, Lithiumalanat bzw. mit primären Aminen.

Aufgabe der vorliegenden Erfindung war es, ein Verfahren zur Verminderung des Halogengehalts von halogenhaltigen Polysilanen und Polycarbosilanen zur Verfügung zu stellen, das apparativ einfach ist, wobei das verwendete Reagens preiswert und ohne größere Sicherheitsvorkehrungen handhabbar ist, sowie unerwünschte Produkte und überschüssiges Reagens sich nach der dem genannten Verfahren zugrundeliegenden Reaktion auf einfache Weise entfernen lassen. Diese Aufgabe wird durch die vorliegende Erfindung dadurch gelöst, daß die genannten Polysilane und/oder Polycarbosilane mit Verbindungen der allgemeinen Formel

$$R-\overset{O}{\overset{\|}{C}}-OR',$$

wobei R Wasserstoff, Methyl- oder Ethylrest und R' Wasserstoff, Lithium, Natrium, Kalium oder Acetylrest bedeutet, in Kontakt gebracht werden.

Bevorzugte erfindungsgemäß eingesetzte Verbindungen sind Ameisensäure, Essigsäure, Propionsäure, Lithiumacetat, Natriumacetat, Kaliumacetat, Acetanhydrid und Propionsäureanhydrid.

Direkt an Siliciumatome gebundenes Halogen enthaltende Polysilane sind z.B. aus der eingangs zitierten Literatur bekannt. Sie sind aus Einheiten der Formel

$R^1{}_n Si$    (I)

aufgebaut, wobei

$R^1$ gleiche oder verschiedene Halogen- und/oder Kohlenwasserstoffreste mit 1 bis 18 Kohlenstoffatomen, insbesondere das Chloratom und/oder der Methylrest;

n eine ganze Zahl im Wert von 0, 1, 2 oder 3 bedeutet, und die Einheiten über Si-Si-Bindungen miteinander verknüpft sind.

Direkt an Siliciumatome gebundenes Halogen enthaltende Polycarbosilane sind ebenfalls bekannt; ihre Herstellung ist beispielsweise in W. Noll, Chemistry and Technology of Silicones, Academic Press, Orlando, 1968, Seite 356 - 364 beschrieben. Sie sind aus Einheiten der Formel

$(R^1{}_n Si\text{-}R^2{}_{3-n})$    (II)

aufgebaut, wobei $R^1$ und n die oben für Formel (I) angege benen Bedeutungen haben, und

$R^2$ zweiwertige Kohlenwasserstoffreste mit 1 bis 18 Kohlenstoffatomen sind, insbesondere Phenylenreste und Reste der Formel

$-(CH_2)_m-$, wobei m eine ganze Zahl von 1 bis 8 ist.

Solche Polycarbosilane sind u.a. durch die Reaktion von Dimethyldichlorsilan mit 1,6-Dichlorhexan zugänglich (ibid, S. 357).

Das erfindungsgemäße Verfahren läßt sich selbstverständlich auf alle Polymere anwenden, die direkt an Siliciumatome gebundenes Halogenatom enthalten. Solche lassen sich beispielsweise auch herstellen durch Pyrolyse von Alkylchlorsilanen bei 400 - 700 °C oder durch Überleiten von $HSiCl_3$, $SiCl_4$ oder $Si_2Cl_6$ über auf 1000 - 1300 °C erhitztes Silicium.

Unter dem eingangs und im Hauptanspruch erwähnten Begriff "Polysilane und/oder Polycarbosilane" sind auch solche Polymere zu verstehen, die in einem Molekül sowohl Einheiten der Formel (I) als auch solche der Formel (II) tragen. Desgleichen sind Mischungen von Polysilanen, Mischungen von Polycarbosilanen, sowie Mischungen von mindestens einem Polysilan mit mindestens einem Polycarbosilan unter diesen Begriff zu zählen.

Die dem erfindungsgemäßen Verfahren zugrundeliegende chemische Reaktion läuft gemäß folgender Gleichung ab:

Polymer-X + R-CO-OR' ⇌ Polymer-OCOR + R'Cl

worin

X ein direkt an ein Siliciumatom gebundenes Halogenatom, vorzugsweise ein Chloratom, bedeutet.

Das erfindungsgemäße Verfahren wird vorzugsweise bei Temperaturen von 20 °C bis 300 °C, insbesondere von 50 °C bis 200 °C durchgeführt.

Die oben genannte Reaktion kann beim Druck der umgebenden Atmosphäre, also 0,102 MPa (abs.) oder etwa 0,102 MPa (abs.), sie kann aber auch bei höheren oder niedrigeren Drücken durchgeführt werden. Drücke von 0,01 MPa bis 2 MPa (abs.) sind bevorzugt.

Die Reaktionszeit beträgt vorzugsweise 0,1 h bis 10 h, insbesondere 1 h bis 5 h.

Das erfindungsgemäße Verfahren kann unter Zusatz eines inerten Lösungsmittels durchgeführt werden. Beispiele für solche Lösungsmittel sind Aromaten und substituierte Aromaten, wie Benzol, Toluol; aliphatische Kohlenwasserstoffe und deren Gemische, wie n-Oktan, n-Decan, Oktan-Isomerengemisch, Petrolether verschiedener Siedebereiche und ähnliche mehr. Geeignet sind auch primäre, sekundäre und tertiäre Amine wie z.B. n-Butylamin, Triethylamin, Pyridin, Picolin als Zusatz oder alleiniges Lösungsmittel.

Auch die Reagentien der allgemeinen Formel R-CO-OR', wobei R und R' die oben dafür gegebene Bedeutung haben, können die Rolle des Lösungsmittels oder Suspendierungsmediums übernehmen, so daß kein zusätzliches Lösungsmittel benötigt wird. Entsprechend kann es ratsam sein, die genannten Reagentien im Überschuß zu der dem zu entfernenden Chlor äquivalenten Menge einzusetzen.

Werden primäre, sekundäre oder tertiäre Amine oder Heterocyclen als Zusatz verwendet, so werden vorzugsweise 0,1 - 10 Mol-% (bezogen auf die Gesamtmolzahl des im chlorenthaltende Polysilan und/oder Polycarbosilan gebundenen Chlors), insbesondere 0,5 - 2 Mol-% eingesetzt.

Die erfindungsgemäß herstellbaren Polysilane und/oder Polycarbosilane werden nach an sich bekannten Verfahren zur Herstellung von SiC, wie SiC-enthaltendem Keramikmaterial, SiC-Fasern oder Sic-enthaltende Keramikschutzschichten verwendet. Eine Übersicht solcher Verfahren beschreibt R. West im Journal of Organometallic Chemistry 300, 327-346 (1986). Hierbei wird das erfindungsgemäß erhaltene Polysilan und/oder Polycarbosilan in inerter Atmosphäre oder im Vakuum bei Temperaturen von 700° bis 1300° C pyrolysiert.

Weiter finden die erfindungsgemäß herstellbaren Polysilane und/oder Polycarbosilane Verwendung als Bindemittel beim Sintern von beispielsweise SiC, $Si_3N_4$, $B_4C$, BN, TiC, TiN.

Die nachfolgenden Beispiele wurden, sofern nicht anders angegeben, beim Druck von 0,10 MPa (abs.) durchgeführt. Die Temperatur betrug, falls nicht anders angegeben, 20° C. Prozentzahlen beziehen sich auf das Gewicht des jeweiligen Polysilans bzw. Polycarbosilans.

Beispiel 1

13,75 g eines 35 Gew.-% Si-gebundenes Chlor enthaltenden Polysilans, dessen organische Gruppen Methylgruppen sind, wurden in 70 ml Xylol gelöst und unter Rühren wurden 28,03 g (0,27 mol) Acetanhydrid zugetropft. Man erhitzte 1 h zum Rückfluß und destillierte anschließend überschüssiges Acetanhydrid sowie gebildetes Acetylchlorid und das Lösungsmittel ab. Bei einer Temperatur von 150 - 200° C wurde Vakuum angelegt. Nach dem Abkühlen erhielt man 16,61 g eines festen, gelben Polymers, welches bei 115° C schmolz, in Toluol, Tetrahydrofuran, $CH_2Cl_2$, $CCl_4$ und $CHCl_3$ löslich war, einen Chlorgehalt von 2,7 % hatte und ein mittleres Molekulargewicht von 80000 g/mol besaß.

Beispiel 2

6,86 g des in Beispiel 1 eingesetzten Polysilans wurden in 35 ml Xylol gelöst und es wurden 8,1 g (0,135 mol) Essigsäure zugetropft. Das Gemisch wurde bis zur Beendigung der Chlorwasserstoffentwicklung am Rückfluß gekocht und anschließend eingeengt. Nach dem Abkühlen erhielt man 7,2 g eines festen hellgelben Polymers, welches bei 110° C schmolz und einen Chlorgehalt von 4,1 % hatte.

Beipiel 3

Die Umsetzung erfolgte analog Beispiel 2. Zusätzlich wurden jedoch nach Beendigung der Chlorwasserstoffentwicklung 11,65 ml Pyridin zugegeben. Diese Mischung wurde kurz aufgekocht und nach Zugabe von 50 ml Xylol wurde die trübe Lösung filtriert und das Filtrat eingedampft. Bei 155° C wurde Vakuum angelegt. Man erhielt 7,1 g eines festen, gelben Polymers, welches in organischen Lösungsmitteln löslich war, einen Schmelzpunkt von 95° C aufwies und einen Chlorgehalt von 0,8 % hatte.

Beispiel 4

Die Polymeren gemäß den Beispielen 1 und 2 wurden bei 1100° C in Argonatmosphäre zu SiC pyrolysiert. Es wurden die nachfolgenden Ausbeuten an SiC erhalten:

Beispiel 1: 73,9 %
Beispiel 2: 79,6 %
Beispiel 3: 57,1 %

Ansprüche

1. Verfahren zur Verringerung des Halogengehalts von direkt an Siliciumatome gebundenes Halogen enthaltenden Polycarbosilanen und/oder Polysilanen, dadurch gekennzeichnet, daß die genannten Polysilane und/oder Polycarbosilane mit Verbindungen der allgemeinen Formel

$$R-\overset{O}{\overset{\|}{C}}-OR',$$

wobei R Wasserstoff, Methyl- oder Ethylrest und R' Wasserstoff, Lithium, Natrium, Kalium jeder Acetylrest bedeutet, in Kontakt gebracht werden.

2. Verfahren nach Anspruch 1, dadurch gekennzeichnet, daß es bei einer Temperatur von 20 °C bis 300 °C durchgeführt wird.

3. Verwendung von Polysilanen und/oder Polycarbosilanen herstellbar nach Anspruch 1 oder 2 zur Herstellung von SiC-enthaltendem Keramikmaterial.

4. Verwendung von Polysilanen und/oder Polycarbosilanen herstellbar nach Anspruch 1 oder 2 zur Herstellung von SiC-enthaltenden Fasern.

5. Verwendung von Polysilanen und/oder Polycarbosilanen herstellbar nach Anspruch 1 oder 2 zur Herstellung von SiC-enthaltenden Keramikschutzschichten.

6. Verwendung von Polysilanen und/oder Polycarbosilanen herstellbar nach Anspruch 1 oder 2 als Bindemittel beim Sintern.